# EUROPEAN PATENT APPLICATION

(11) **EP 0 944 288 A2**
(43) Date of publication of application: **22.09.1999**
(21) Application number: 99105473.5
(22) Date of filing: 17.03.1999
(51) Int. Cl.: H04Q 11/04, H04L 12/56

(54) **An ATM exchange having packet processing trunks**

(30) Priority: 20.03.1998 JP 9064298
(71) Applicant: NEC CORPORATION, Tokyo (JP)
(72) Inventor: Ikeda, Hiroshi, Minato-ku, Tokyo (JP); Honda, Masahiko, Minato-ku, Tokyo (JP); Aramaki, Toshiya, Minato-ku, Tokyo (JP)
(74) Representative: Baronetzky, Klaus, Dipl.-Ing.

(57) **Abstract**

To provide an ATM exchange to be used as a node of a backbone network of the internet communication which does not need routers and has a sufficient flexibility to change of packet traffic flows, an ATM exchange comprises an ATM switch (11) for switching ATM cells; line interfaces (2₁ to 2_{*n*}) connected between the ATM switch (11) and exchange lines; a packet processing trunk (4₁) connected to the ATM switch (11) for processing packet data carried on ATM cells to be switched at layer-3; and a central unit (31) for establishing ATM connections (A) for packet flows and ATM connections (B) for non-packet flows. ATM cells assigned with the ATM connections (A) for packet flows are switched towards the packet processing trunk (4₁) and switched again towards the line interfaces (2₁ to 2_{*n*}) corresponding to the next destinations of the packet data, after processed by the packet processing trunk (4₁).

## Description

The present invention relates to an ATM (Asynchronous Transfer Mode) exchange, and particularly to the ATM exchange to be used as a node of a backbone network of the internet communication.

Along with traffic increase of the internet communication, many providers of the public network or the internet services are tending to introduce the ATM communication network as their high-speed and wide-bandwidth backbone network.

Conventionally, for configuring such an ATM communication network to be used as the backbone network of the internet communication, routers each having an ATM interface have been used in combination with an ATM exchange, or an ATM exchange called the IP (Internet Protocol) switch has been used, which switches ATM cells at high speed by way of cut-through connections wherein a VPI (Virtual Path Identifier) or a VCI (Virtual Connection Identifier) is assigned as an ATM link for each IP flow of internet packets, that is, each succession of internet packets having a specific destination.

The IP switch uses a special protocol for notifying adjoining nodes of the VPI/VCI assigned to each IP flow. The IFMP (Ipsilon Flow Management Protocol) is a representative example of the special protocol used by the IP switch for the purpose.

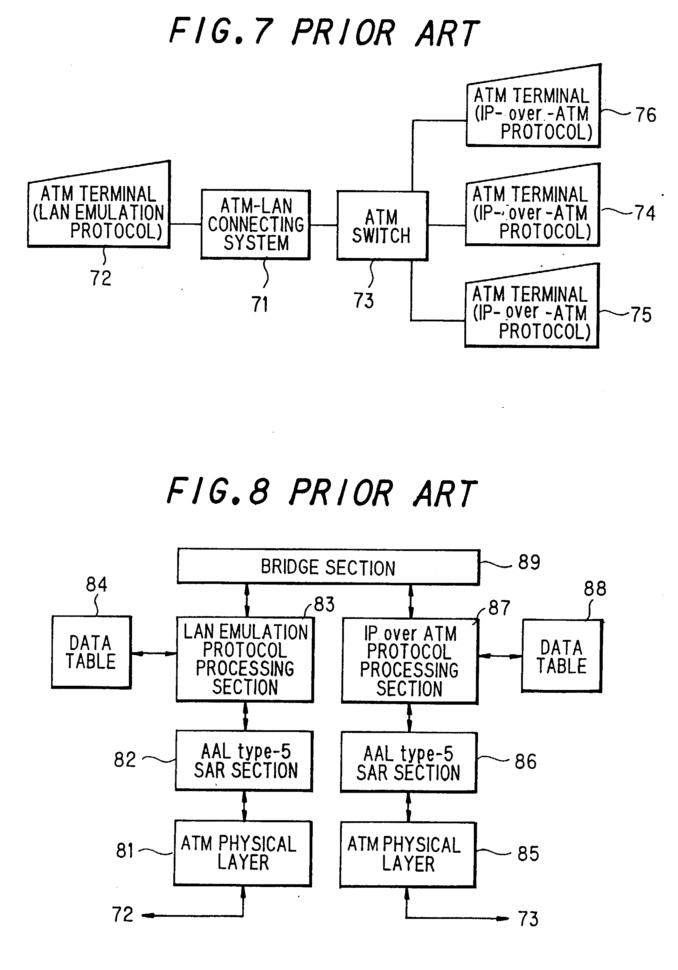

FIG. 7 is a block diagram illustrating a network configuration of an ATM communication network disclosed in a Japanese patent application laid open as a Provisional Publication No. 27418/'96 entitled "An ATM-LAN Connecting System and an ATM-LAN". In the prior art of FIG. 7, there is provided an ATM-LAN connecting system 71 having an internal configuration as illustrated in FIG. 8 between an ATM switch 73 and a first ATM terminal 72, which uses LAN (Local Area Network) emulation protocol, for connecting the first ATM terminal 72 to a second to a fourth ATM terminals 74, 75 and 76 all using IP-over-ATM protocol, by way of the ATM switch 73.

When the first ATM terminal 72 transmits ATM cells to the second ATM terminal 74, for example, the ATM cells are received at an ATM physical layer 81 of the ATM-LAN connecting system 71 and reassembled into AAL (ATM Adaptation Layer) type-5 packets by an AAL type-5 SAR (Segmentation And Reassembly) section 82. The AAL type-5 packets are transferred as LAN emulation frames to a LAN-emulation-protocol processing section 83. The LAN-emulation-protocol processing section 83 performs necessary processings onto the LAN emulation frames referring to a data table 84, and transfers them to a bridge section 89.

In the bridge section 89, the LAN emulation frames are converted into IP-over-ATM frames and transferred to an IP-over-ATM protocol processing section 87. The IP-over-ATM protocol processing section 87 performs necessary processings to the IP-over-ATM frames referring to a data table 88. Receiving AAL type-5 packets from the IP-over-ATM frames after processed, an AAL type-5 SAR section 86 segments the AAL type-5 packets into ATM cells to be transmitted to the ATM switch 73 through an ATM physical layer 85.

ATM cells which are transmitted from the second ATM terminal 74, for example, and forwarded to the first ATM terminal 72 through the ATM switch 73 are processed in the ATM-LAN connecting system 71 in an inverse way as above described.

The conventional ATM communication network using the routers has a problem that both the ATM exchange and the routers should be provided, which requires more complicated controls in the network maintenance and the equipment maintenance compared to the ATM communication network consisting of single type components, in addition to the increase of component numbers. Another problem is that it is difficult to modify the ATM communication system flexibly according to change of traffics or the network configuration, since PVC (Permanent Virtual Circuit) is generally applied for connecting the routers to the ATM exchange.

As to the ATM communication network composed of IP switches, it needs the special protocol, and therefore, all nodes of the ATM communication network should be composed of the IP switches, lacking of generality of the network. Another problem of the ATM communication network composed of IP switches is that it cannot treat various traffics such as digital data, voice data or image data, because the IP switches can switch only ATM cells carrying the IP packets.

Still further, the ATM communication network according to the prior art of FIG. 7 has a problem that it cannot connect but terminals using the LAN emulation protocol or the IP-over-ATM protocol.

Therefore, a primary object of the present invention is to resolve above problems, and to provide an ATM exchange to be used as a node of a backbone network of the internet communication which does not need routers and has a sufficient flexibility against change of packet traffic flows.

In order to achieve the object, an ATM exchange of the invention comprises:
an ATM switch for switching ATM cells;
a plurality of line interfaces each connected between the ATM switch and respective one of exchange lines to be switched by the ATM switch;
at least one packet processing trunk connected to the ATM switch having an AAL processing section for reassembling ATM cells delivered from the ATM switch into first packet data and segmenting second packet data into ATM cells to be switched through the ATM switch, and a layer-3 packet processing section for processing the first pacl;et data into the second packet data to be transmitted towards next destinations indicated by the first packet data; and
a central unit for controlling the ATM switch, the line interfaces, and the packet processing trunk.

The central unit controls the ATM switch, the line interfaces, and the packet processing trunk to establish first ATM connections for packet flows and second ATM connections for non-packet flows. ATM cells flowing in through the line interfaces and carrying packet data are switched towards the packet processing trunk and ATM cells processed by the packet processing trunk are switched towards the line interfaces corresponding to the next destinations of the packet data carried by the ATM cells according to the first ATM connections, and ATM cells flowing in through the line interfaces and carrying non-packet data are switched towards respective line interfaces according to the second ATM connections.

Therefore, an ATM communication network, which can deal with ATM cells carrying packet data according to IP protocol, for example, as well as ATM cells carrying non-packet data, can be easily realized, making use of the ATM exchange of the embodiment, without needing any other component such as routers, enabling to reduce the equipment cost and the maintenance cost of the network.

Further, the number of the packet processing trunks can be determined according to traffic amount of packet data to be exchanged by the ATM exchange. Therefore, by increasing or reducing numbers of the packet processing trunks, the ATM exchange of the invention can be flexibly adapted to change of packet traffics.

According to an aspect of the invention, the line interfaces are divided into groups, and ATM cells carrying packet data and flowing in through each of the groups of the line interfaces are switched towards and processed by a different packet processing trunk, or by dividing the first ATM connections into groups according to VCIs or VPIs, ATM cells assigned with each of the groups of the first ATM connections are switched towards and processed by a different processing trunk.

Still further, by providing the packet processing trunks separately according to kinds of protocol used or to be used in packet data, packets of any kind of existing protocol or newly developed protocol can be easily supported without affected from other protocol, in the ATM exchange of the invention, enabling to realize an effective and simple multi-protocol network.

The foregoing, further objects, features, and advantages of this invention will become apparent from a consideration of the following description, the appended claims, and the accompanying drawings wherein the same numerals indicate the same or the corresponding parts.

In the drawings:
FIG. 1 is a block diagram illustrating a basic configuration of an ATM exchange according to an embodiment of the invention;
FIG. 2 is a block diagram illustrating an internal configuration of each of the packet processing trunks 4₁ to 4_{*j*} of FIG. 1;
FIG. 3 is a block diagram for illustrating ATM connections to be established through the ATM switch 11 of FIG. 1;
FIG. 4 is a block diagram illustrating another example of the ATM exchange of FIG. 1;
FIG. 5 is a block diagram illustrating another example of the ATM exchange of FIG. 1;
FIG. 6 is a block diagram illustrating still another example of the ATM exchange of FIG. 1;
FIG. 7 is a block diagram illustrating a network configuration of an ATM communication network according to a prior art; and
FIG. 8 is a block diagram illustrating an internal configuration of the ATM-LAN connecting system 71 of FIG. 7.

Now, embodiments of the present invention will be described in connection with the drawings.

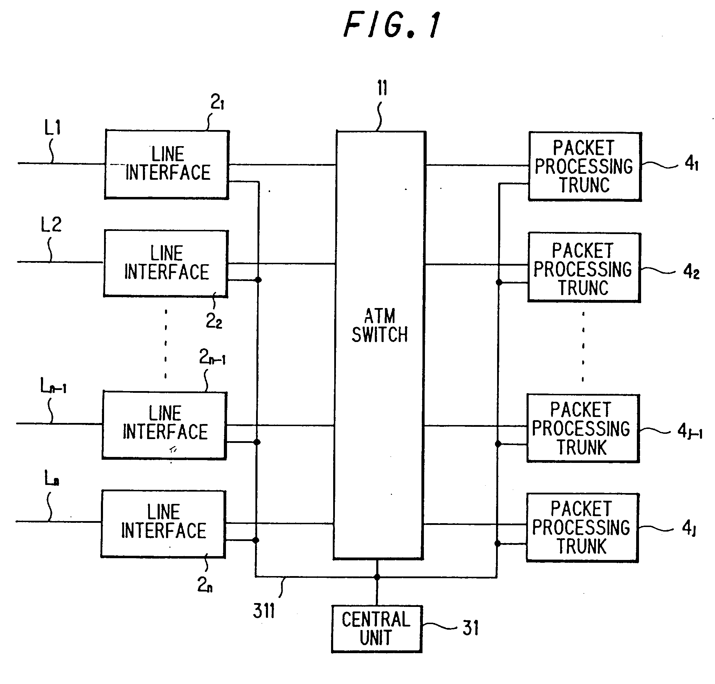

FIG. 1 is a block diagram illustrating a basic configuration of an ATM exchange according to an embodiment of the invention.

The ATM exchange of FIG. 1 comprises;
an ATM switch 11,
a plurality of line interfaces 2₁ to 2_{*n*} (*n* being an positive integer more than 2) each connected between the ATM switch 11 and respective one of exchange lines L₁ to L_{*n*} to be switched by the ATM switch 11,
at least one packet processing trunk 4₁ to 4_{*j*} (*j* being an positive integer) connected to the ATM switch 11, and
a central unit 31 connected to the ATM switch 11, the line interfaces 2₁ to 2_{*n*}, and the packet processing trunks 4₁ to 4_{*j*} by way of a control bus 311.

The central unit 31 performs necessary controls such as call processing or system management of the ATM exchange functioning as an ordinary exchange. The central unit 31 may be realized with software executed by a CPU associated with a main memory and a second memory for storing the software, or some special hardware may be comprised in the central unit 31.

The packet processing trunks 4₁ to 4_{*j*} takes charge of performing necessary processings at layer-3 onto ATM cells of packet data which are inputted from the line interfaces 2₁ to 2_{*n*} and switched thereto through the ATM switch 11.

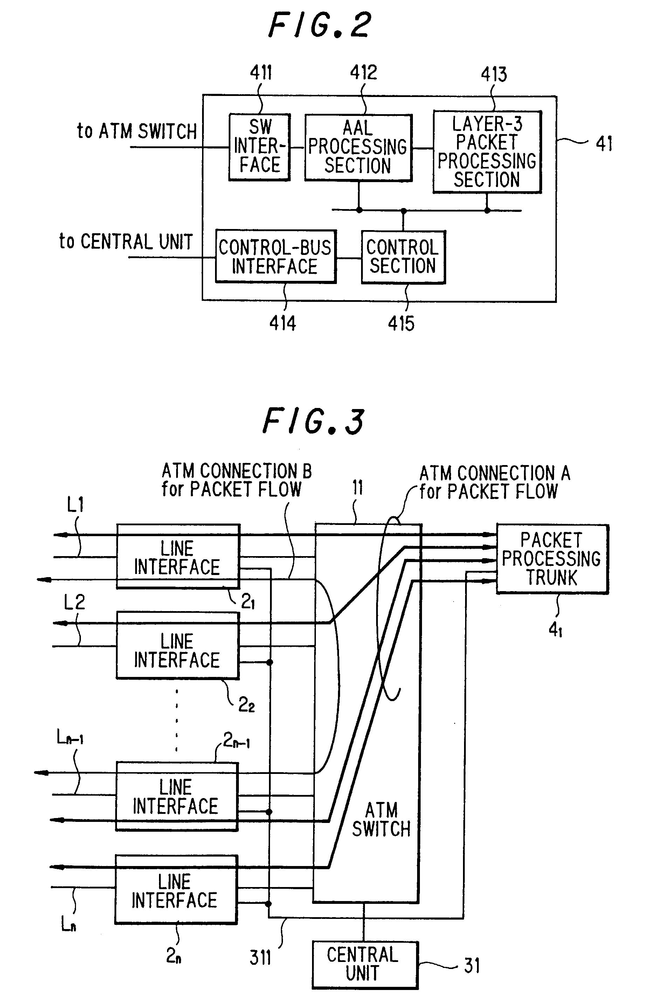

FIG. 2 is a block diagram illustrating an internal configuration of each, 4₁, for example, of the packet processing trunks 4₁ to 4_{*j*}, wherein comprised a SW (switch) interface 411, an AAL processing section 412, a layer-3 packet processing section 413, a control-bus interface 414 and a control section 415.

The SW interface 411 interfaces the ATM switch 11 and the AAL processing section 412. When a standby system is provided to the ATM switch 11, the SW interface 411 is connected also to the standby system and selects the standby system when the actual system is disabled.

The AAL processing section 412 takes charge of reassembling ATM cells received from the SW interface 411 into packets to be processed by the layer-3 packet processing section 413, and segmenting packets received from the layer-3 packet processing section 413 into ATM cells to be returned through the SW interface 411.

The layer-3 packet processing section 413 relays received packets into transmission packets by performing necessary sequences of processings, such as header information checking, TTL (Time-To-Level) calculation, header check-sum calculation, sender IP address checking, or next address retrieval, when the packets are the IP packets, for example.

The control section 415 exchanges messages concerning packet processing, system status control or fault notification with the central unit 31 through the control-bus interface 414.

The control section 415 is also connected to the AAL processing section 412 and the layer-3 packet processing section 413 for monitoring and controlling them.

Here, the control section 415, the layer-3 packet processing section 413 and the AAL processing section 412 may be realized separately or in combination with software executed by one or more CPUs, or may be realized with one or more specific LSI chips or with combination of software and hardware.

FIG. 3 is a block diagram for illustrating ATM connections to be established through the ATM switch 11 of FIG. 1. In the example of FIG. 3, only one packet processing trunk 4₁ is depicted for simplification.

In FIG. 3, thick lines having left-right arrows connected to the packet processing trunk 4₁ represent ATM connections assigned to ATM cells of packet data such as IP packets used in the internet or IPX packets used in the NetWare (trademark of Novel Corporation). The ATM connections assigned to ATM cells of packet data are hereinafter called the ATM connections A for packet flows.

ATM cells carrying data other than packet data are not necessary to be processed by the packet processing trunk 4₁, and therefore, they are to be switched by the ATM switch 11 directly between two of the line interfaces 2₁ to 2_{*n*}, according to ATM connections such as represented by a narrow line having left-right arrows connecting the line interfaces 2₁ and 2_{*n*}₋₁, in the example of FIG. 3. The ATM connections assigned to ATM cells of non-packet data are hereinafter called the ATM connections B for non-packet flows. The ATM connections B for non-packet flows are to be established between two user terminals communicating directly, or between two other ATM exchanges adjoining to the ATM exchange.

The ATM connections A for packet flows and the ATM connections B for non-packet flows are to be established by the network manager with PVCs (Permanent Virtual Circuits) or to be established with SVCs (Switched Virtual Circuits) according to signaling from a user terminal or an ATM exchange which is connected to one of the exchange lines L₁ to L_{*n*}.

ATM cells of a traffic flowing on the ATM connections B for non-packet flows are switched by the ATM switch 11 at the cell level from one to another of the line interfaces 2₁ to 2_{*n*}.

ATM cells of a traffic flowing on the ATM connections A for packet flows are switched towards the packet processing trunk 4₁. In the packet processing trunk 4₁, the AAL processing section 412 reassembles the ATM cells into packets. The layer-3 packet processing section 413 performs necessary checks of the packets such as header information checking, TTL calculation, header check-sum calculation, or sender IP address checking, and retrieves next addresses whereto the packets are to be forwarded. The packets are returned to the AAL processing section 412 and segmented again into ATM cells to be switched by the ATM switch 11 according to respective ATM connections A for packet flows corresponding to the next addresses.

The center unit 31 monitors and controls the line interfaces 2₁ to 2_{*n*}, the ATM switch 11 and the packet processing trunk 4₁ by way of the control bus 311.

Thus, the ATM cells flowing on the ATM connections A for pacl;et flows are once switched by the ATM switch 11 to the packet processing trunk 4₁ and switched again towards next destinations after processed with necessary processings at layer-3 in the packet processing trunk 4₁, in the ATM exchange of the embodiment, while the ATM cells flowing on the ATM connections B for non-packet flows are switched by the ATM switch 11 directly towards respective exchange lines L₁ to L_{*n*}.

Therefore, an ATM communication network, which can deal with ATM cells carrying packet data according to IP protocol, for example, as well as ATM cells carrying non-packet data, can be easily realized, making use of the ATM exchange of the embodiment, without needing any other component such as the routers, enabling to reduce the equipment cost and the maintenance cost of the network.

In the example of FIG. 3, only one packet processing trunk 4₁ is connected to the ATM switch 11. However, necessary numbers of packet processing trunks 4₁ to 4_{*j*} may be provided to the ATM switch 11, as will be described in the following paragraphs, for dispersing processing load of the packet processing trunk 4₁, when traffics of the ATM cells flowing on the ATM connections A for packet flows exceed processing capacity of one packet processing trunk.

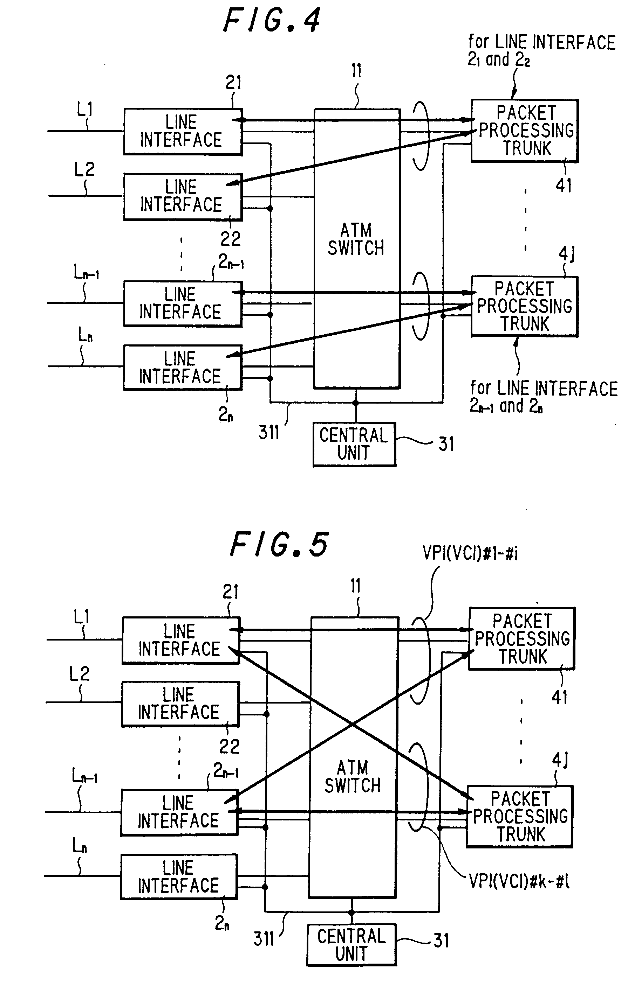

FIG. 4 is a block diagram illustrating another example of the ATM exchange of FIG. 1, wherein more than one packet processing trunks 4₁ to 4_{*j*} are connected to the ATM switch 11 and each of the packet processing trunks 4₁ to 4_{*j*} is assigned to a different group of the line interfaces 2₁ to 2_{*n*}. In the example of FIG. 4, the packet processing trunk 4₁ is assigned to ATM connections for packet flows flowing in from the line interfaces 2₁ and 2₂ and the packet processing trunk 4_{*j*} is assigned to ATM connections for packet flows flowing in from the line interfaces 2_{*n*}₋₁ and 2_{*n*}.

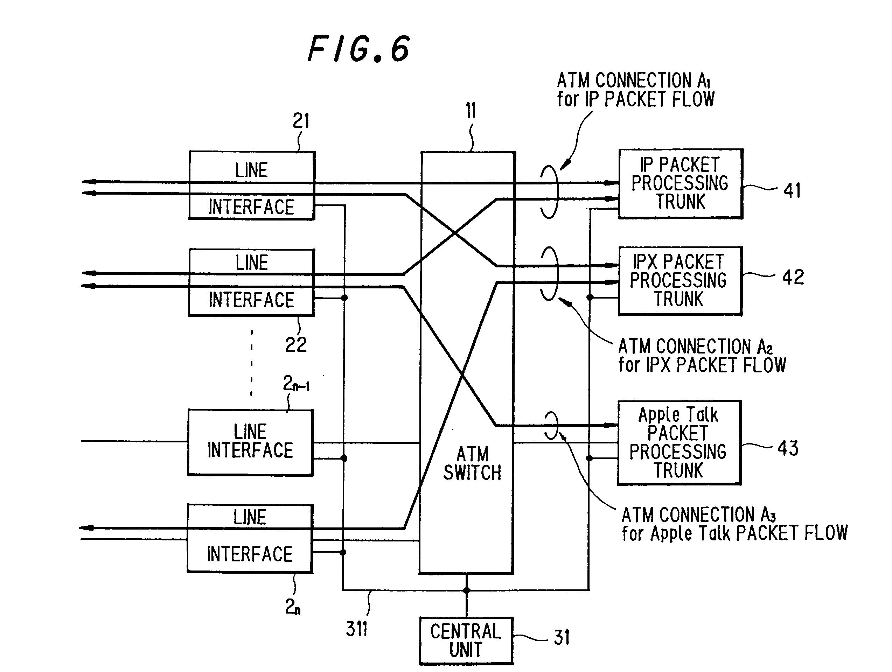

FIG. 5 is a block diagram illustrating another example of the ATM exchange of FIG. 1, wherein the ATM connections for packet flows are divided into connection groups according to their VPIs (Virtual Path Identifiers) or their VCIs (Virtual Channel Identifiers), and each of the connection groups is connected to different one of packet processing trunks 4₁ to 4_{*j*}. In the example of FIG. 5, the packet processing trunk 4₁ is assigned to ATM connections for packet flows having VPIs or VCIs #1 to #*i* and the packet processing trunk 4_{*j*} is assigned to ATM connections for packet flows having VPIs or VCIs #*k* to #*l*.

FIG. 6 is a block diagram illustrating still another example of the ATM exchange of FIG. 1, wherein ATM cells of packets according to different kinds of protocol are to be exchanged and a specific packet processing trunk is provided for each kind of the protocol.

In the example of FIG. 6, an IP packet processing trunk 4₁, an IPX packet processing trunk 4₂ and an Apple Talk (trademark of Apple Computer Corporation) packet processing trunk 4₃ are provided, and there are established ATM connections A₁ for IP packet flows from the line interfaces 2₁ and 2₂ to the IP packet processing trunk 4₁ and vice versa, ATM connections A₂ for IPX packet flows from the line interfaces 2₁ and 2_{*n*} to the IPX packet processing trunk 4₂ and vice versa, and an ATM connection A₃ for Apple Talk packet flows between the line interface 2₂ and the Apple Talk packet processing trunk 4₃.

In the example of FIG. 6, different packet processing trunks are provided according to kinds of protocol used in the packets transmitted on the ATM cells, respectively. Therefore, packets of each kind of protocol can be processed without affected from other kinds of protocol, which enables to simplify the system configuration and the system management.

In the examples of FIGs. 4 to 6, the establishment of the ATM connections is performed in the same way as beforehand described in connection with FIG. 3.

Heretofore, the call processings are described to be performed by the central unit 31. However, the call processings may be also performed by each of the packet processing trunks. By dispersing the call processings to each of the packet processing trunks, increase of call processing load can be easily dealt with by increasing numbers of the packet processing trunks.

As heretofore described, packet processing trunks are provided being connected to trunk lines of an ATM switch, in the ATM exchange according to the invention, for performing necessary processings at layer-3 onto packets carried on ATM cells to be exchanged.

Therefore, an ATM communication network which can exchange packet data and non-packet data at the same time can be easily realized making use of the ATM exchange of the invention, without needing any other component such as routers, enabling simple management of the network, as well as to reduce the equipment cost and the maintenance cost of the network.

Further, by increasing or reducing the number of the packet processing trunks, the ATM exchange of the invention can be easily adapted to change of packet traffics.

Still further, by providing the packet processing trunks separately according to kinds of protocol used or to be used in packet data, packets of any kind of existing protocol, such as IP protocol, IPX protocol, Apple Talk protocol, or packets according to newly developed protocol, can be easily supported without affected from other kinds of protocol, in the ATM exchange of the invention, enabling to realize an effective and simple multi-protocol network.

## Claims

1. An ATM (Asynchronous Transfer Mode) communication system comprising:
an ATM switch (11) for switching ATM cells;
a plurality of line interfaces (2₁ to 2_{*n*}) each connected between the ATM switch (11) and respective one of exchange lines to be switched by the ATM switch (11);
a packet processing trunk (4₁) connected to the ATM switch (11) having an AAL (ATM Adaptation Layer) processing section (412) for reassembling ATM cells delivered from the ATM switch (11) into first packet data and segmenting second packet data into ATM cells to be switched through the ATM switch (11), and a layer-3 packet processing section (413) for processing the first packet data into the second packet data to be transmitted towards next destinations indicated in the first packet data; and
a central unit (31) for controlling the ATM switch (11), the line interfaces (2₁ to 2_{*n*}), and the packet processing trunk (4₁).

2. An ATM exchange as recited in claim 1; wherein the central unit (31) controls the ATM switch (11), the line interfaces (2₁ to 2_{*n*}), and the packet processing trunk (4₁) to establish first ATM connections for packet flows and second ATM connections for non-packet flows, ATM cells flowing in through the line interfaces (2₁ to 2_{*n*}) and carrying packet data being switched towards the packet processing trunk (4₁) and ATM cells processed by the packet processing trunk (4₁) being switched towards the line interfaces (2₁ to 2_{*n*}) corresponding to the next destinations of the packet data carried by the ATM cells according to the first ATM connections, and ATM cells flowing in through the line interfaces (2₁ to 2_{*n*}) and carrying non-packet data being switched towards respective line interfaces (2₁ to 2_{*n*}) according to the second ATM connections.

3. An ATM exchange as recited in claim 1; wherein the central unit (31) controls the ATM switch (11), the line interfaces (2₁ to 2_{*n*}), and the packet processing trunk (4₁) making use of massages exchanged through a control bus connected among them.

4. An ATM communication system comprising:
an ATM switch (11) for switching ATM cells;
a plurality of line interfaces (2₁ to 2_{*n*}) each connected between the ATM switch (11) and respective one of exchange lines to be switched by the ATM switch 11;
more than one packet processing trunks (4₁ to 4_{*j*}) connected to the ATM switch (11), each having an AAL processing section (412) for reassembling ATM cells switched from the ATM switch (11) into first packet data and segmenting second packet data into ATM cells to be switched through the ATM switch (11), and a layer-3 packet processing section (413) for processing the first packet data into the second packet data to be transmitted towards next destinations indicated in the first pacl;et data; and
a central unit for controlling the ATM switch (11), the line interfaces (2₁ to 2_{*n*}), and the packet processing trunl;s (4₁ to 4_{*j*}) to establish first ATM connections for packet flows and second ATM connections for non-packet flows, ATM cells flowing in through the line interfaces (2₁ to 2_{*n*}) and carrying packet data being switched towards the packet processing trunks (4₁ to 4_{*j*}) and ATM cells processed by the packet processing trunks (4₁ to 4_{*j*}) being switched towards the line interfaces (2₁ to 2_{*n*}) corresponding to the next destinations of the packet data carried by the ATM cells according to the first ATM connections, and ATM cells flowing in through the line interfaces (2₁ to 2_{*n*}) and carrying non-packet data being switched towards respective line interfaces (2₁ to 2_{*n*}) according to the second ATM connections.

5. An ATM exchange as recited in claim 4; wherein:
the line interfaces (2₁ to 2_{*n*}) are divided into groups; and
ATM cells carrying packet data and flowing in through each of the groups of the line interfaces (2₁ to 2_{*n*}) are switched towards and processed by different one of said more than one packet processing trunks (4₁ to 4_{*j*}).

6. An ATM exchange as recited in claim 4; wherein:
the first ATM connections are divided into groups according to VCIs (Virtual Channel Identifiers) or VPIs (Virtual Path Identifiers) used for their connection identifiers; and
ATM cells assigned with each of the groups of the first ATM connections are switched towards and processed by different one of said more than one packet processing trunks (4₁ to 4_{*j*}).

7. An ATM exchange as recited in claim 4; wherein:
the first ATM connections are divided into groups according to kinds of protocol of the packet data carried by ATM cells assigned with the first ATM connections; and
ATM cells assigned with each of the groups of the first ATM connections are switched towards and processed by different one of said more than one pacl;et processing trunks (4₁ to 4_{*j*}).
